# EUROPEAN PATENT SPECIFICATION

(11) **EP 2 881 848 B1**
(45) Date of publication and mention of the grant of the patent: **08.11.2023**
(21) Application number: 14157285.9
(22) Date of filing: 28.02.2014
(51) Int. Cl.: G06F 3/04847, G06F 16/9032, G06Q 30/06

(54) **Apparatus, method and computer readable medium for making a selection**
Vorrichtung zur Durchführung einer Auswahl und Verfahren und computerlesbares Medium hierfür
Appareil, méthode et support lisible par ordinateur pour effectuer une sélection

(30) Priority: 06.12.2013 GB 201321620
(43) Date of publication of application: 10.06.2015
(73) Proprietor: Synchronoss Technologies, Inc., Bridgewater, NJ 08807 (US)
(72) Inventor: Woollvin, Steven, London W3 6RS (GB); Moore, Steven, London W3 6RS (GB)
(74) Representative: Murgitroyd & Company

(56) References cited:
- US-A- 5 206 949
- US-A1- 2006 061 572
- US-B1- 6 460 025

## Description

The invention relates to an apparatus for assisting a user in making a selection and a corresponding method and computer readable medium.

People regularly encounter situations where they faced with making a decision based on a large array of related parameters, and find it difficult to pick the combination of parameters that best suits their needs. They may have several parameter choices in mind and need to know what other parameters are available for selection with their predetermined parameter choices.

US 5206949 A discloses a method of variably displaying search terms which includes continuously displaying the names of categories on a video terminal screen. When the cursor is adjacent a category, one data set or search term is displayed, that search term being one of a plurality of terms in a list associated with the particular category. The user displays another term from the list by actuating a scrolling control key input. To select a desired term and move to the next category, the user actuates a select control key input. The display system of US 5206949 A utilizes only two control inputs to select a plurality of terms for a plurality of categories. One list of terms represents control commands that control, among other things, the output of data from the system. One technique of formulating the list is to obtain the data fields from a particular field, corresponding to the category, from all records in a data base. The retrieved data fields are then used as search terms in this dynamically formed list. The terms can also be grouped in fixed or static lists. A routine is used to segment or subdivide the data base search for the dynamic list or to subdivide the static list. US 6460025 B1 discloses a method, system, and computer readable code for improving user exploration (i.e. navigation and browsing) through hierarchies of information.

US 2006/061572 A1 discloses a system and method for graphically representing on a computer system the relationship between a plurality of variables related by an equation.

The present invention provides an apparatus for assisting a user in selecting a plurality of compatible data items, a method for assisting a user in selecting a plurality of compatible data items and a computer readable medium carrying computer readable code for controlling the apparatus to carry out the same, as set out in the appended set of claims.

Embodiments of the present invention will now be described, by way of example only, with reference to the following drawings, in which:
Figure 1 is a diagram illustrating a system according to an embodiment;
Figure 2 is a diagram illustrating a system according to an embodiment;
Figure 3 is a display device according to an embodiment of the present invention;
Figure 4 is a graphical user interface according to an embodiment of the present invention;
Figure 5 is a flowchart illustrating a method of operation of the display device according to an embodiment of the present invention.
Figure 6 is an example of the graphical user interface of Figure 4.
Figure 7 is a graphical user interface according to an embodiment of the present invention.
Figure 8 is a graphical user interface according to an embodiment of the present invention.
Figure 9 is a flowchart illustrating a method of operation of the graphical user interface.

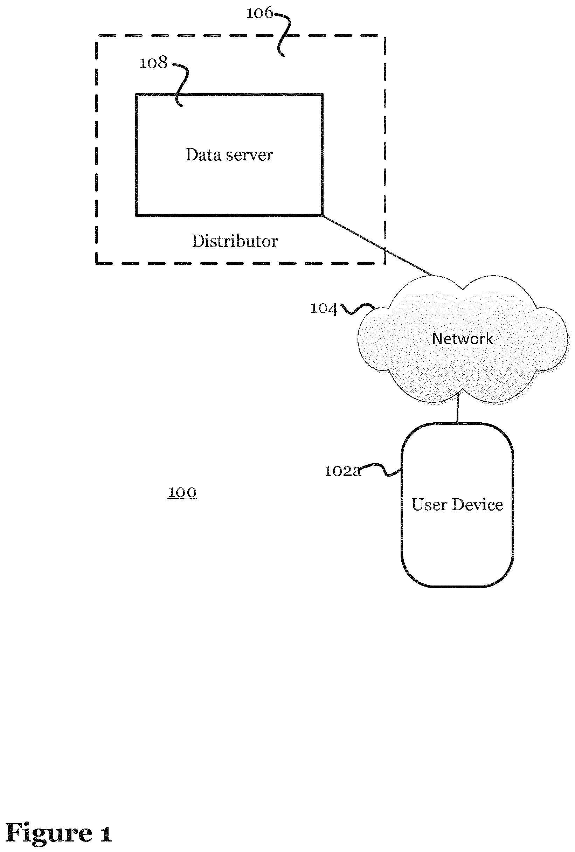

The embodiments of figures 1, 2, 3 and 9 do not describe the full and complete combination of features of the invention as claimed but are useful in understanding the invention.

Hereinafter, the embodiments of an apparatus for making a selection will be described.

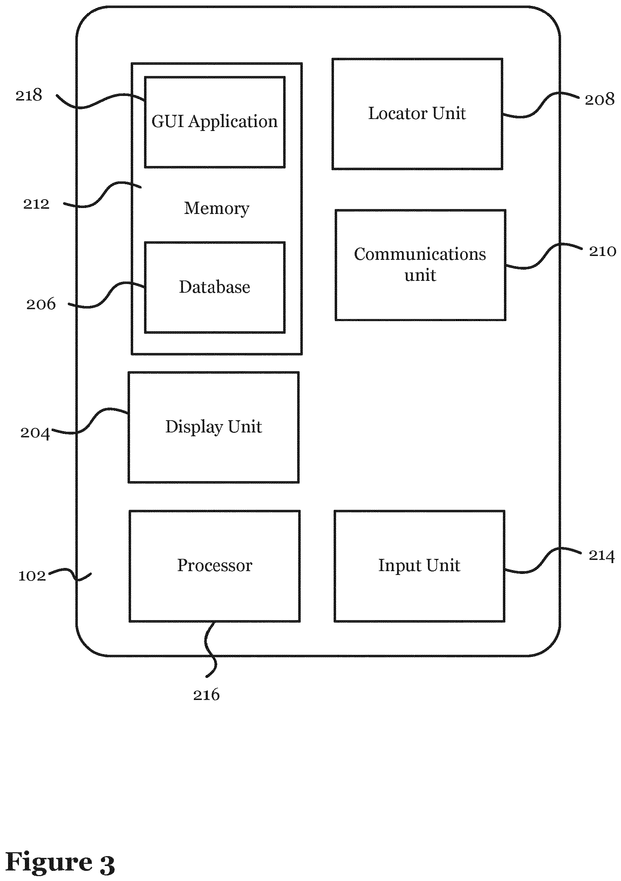

Figure 1 shows a system 100 according to an embodiment of the present invention. In the system 100, a user device 102 is connected to a network 104. The user device will be described later with reference to Figure 3. In this embodiment, the network 104 is a local network, e.g. a WiFi network. In other embodiments, the network 104 may be an external network such as the Internet.

The network 104 is coupled to a distributer 106. The distributer 106 provides information to the user device 102. The information provided to the user device 102 by the distributer 106 is stored in a data server 108.

Figure 3 shows a user device 102 for displaying a graphical user interface according to an embodiment of the present invention. The user device 102 may be a mobile communications device, a personal computer, a personal display device, a tablet, a smart phone, a television, a games console, or other such device. It would be understood to the person skilled in the art that the aforementioned list of devices is not exhaustive, and other embodiments of the invention could use other user devices.

The user device 102 comprises an input unit 214. In this embodiment, the input unit 214 comprises a touchscreen that is integrated with the display unit 204. In other embodiments, input unit 214 may be implemented in other ways, such as a keyboard or a mouse. In some embodiments, the input unit 214 comprises a speech to text converter.

The input unit 214 receives user instructions and sends them to a processor 216. The processor 216 determines an output for the display unit 204 based on the user instructions.

In some embodiments, the display unit 204 may be an integral part of the user device 102, as typically found in a mobile communication device. In other embodiments, the display unit 204 may be an external display.

The display unit 204 is arranged to display a plurality of dynamic display regions. Each dynamic display region being associated with a respective set of data items for display.

The data items for display on the display unit 204 are stored in a database 206. The database 206 is part of a memory 212. The data items in the database 206 are provided to the user device by the distributer 106.

The data items are divided according to different categories, with each category comprising a data set. In this embodiment, the data items comprise alphanumeric characters and symbols. The database 206 also includes compatibility information relating to how each data item in each set is compatible with the data items in the other sets.

The communication unit 210 comprises an antenna, a receiver and a transmitter. The communication unit 210 is configured to communicate with the data server 108 of the distributer 106, for example to receive data.

The communication unit 210 may be connected to the data server 108 of the distributer 106. The communication unit 210 receives collated data from the data server 108. The communication unit 210 may also be configured to transmit data back to the data server 108 of the distributer 106.

In some embodiments, information (e.g. the data items and compatibility information) may be pushed to the user device 102 at specific time intervals by the data sever 108 of the distributer 106 via the communication unit 210. In some embodiments, the information may be pushed when the information is updated in the data sever 108. Alternatively, in other embodiments, the user device 102 may pull the information from the data server 108.

The memory 212 may be volatile memory, such as Random Access Memory. Alternatively, the memory 212 may be non-volatile memory, such as a solid state hard drive.

In this embodiment, the user device 102 includes a GUI application 218. The GUI application is stored in the memory 212. The GUI application 218 launches a GUI that presents selectable information on the display unit 204. In other embodiments, the GUI may be accessible through a web page.

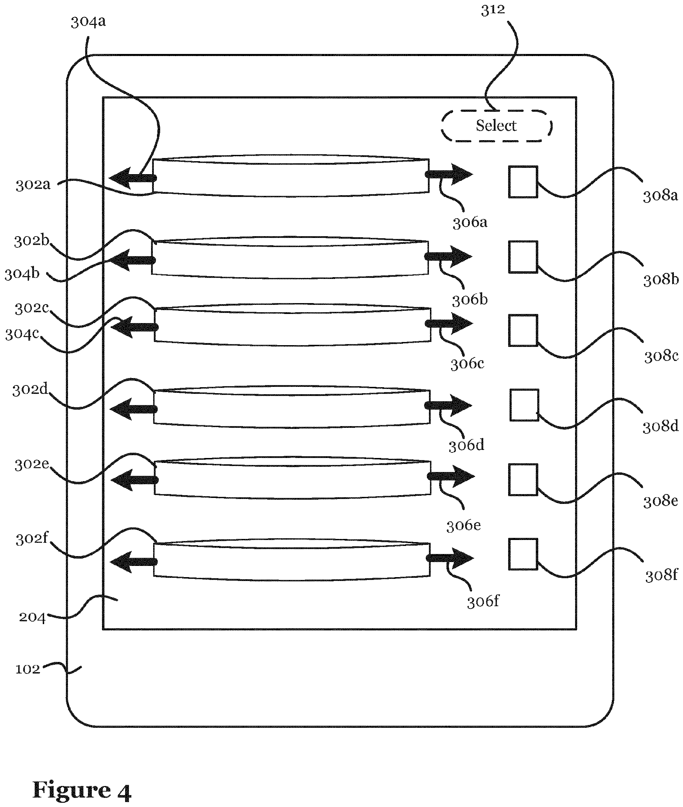

Figure 4 shows a Graphical User Interface (GUI) according to an embodiment of the present invention for displaying on the display unit 204 of the user device 102 as the input unit 214.

The GUI comprises a plurality of dynamic display regions 302a-302f (generally, 302). The dynamic display regions 302 are configured to display a selected data item. Each dynamic display region 302 is associated with a respective set of data items for display.

It will be appreciated by the person skilled in the art that the dynamic display regions 302 can be arranged in other layouts in other embodiments. For example, the dynamic display regions 302 could be disposed horizontally rather than disposed vertically, or in other configurations. In this embodiment, the dynamic display regions 302 comprise rollers. The rollers can be rotated left or right to select data items for display. In this embodiment, the selected data item (i.e. the presently displayed data item) will become hidden as the roller is rotated. In other words, the presently displayed data item will be replaced when the roller is rotated to select a new data item. The rollers are rotated left or right using selectable arrows 304,306 shown on the GUI.

Hence, the input unit 214 in this embodiment is arranged to receive a user selection of a data item for display in a dynamic display region 302 by means of the rollers. Each of the dynamic display regions 302 are independently selectable using the input unit 214.

In some embodiments, the data sets may have their data items arranged in a preset order. For example, when the first dynamic display region 302a is rotated to the right, a data item next in the order will be displayed, and when the first dynamic display region 302a is rotated to the left, a data item previous in the order will be displayed.

In this embodiment, each dynamic display region 302 is associated with a different category of data. In this embodiment, the dynamic display regions 302 are disposed in a column arrangement. That is to say, the first dynamic display region 302a is disposed above the second dynamic display region 302b etc. In some embodiments, the order of the dynamic display regions is in a hierarchical structure. In other embodiments, the dynamic display regions may be ordered without any hierarchy. In either case, as discussed, the dynamic display regions 302 are independently selectable.

When a first data item is selected in a first dynamic display region 302a, the remaining dynamic display regions 302b-f are configured to show a data item that is compatible with the first data item, and compatible with each other. The processor 216 is arranged to determine, when a first data item in the first dynamic display region 302a is selected for display, which data items in the other sets are compatible with each other and with the first data item using the compatibility information.

Hence, once the first data item has been selected for display in the first dynamic display region 302a, the display is arranged to display a compatible data item in each of the other dynamic display regions 302.

Then, rotating a second dynamic display region 302b to select a new data item may cause changes to the displayed data items depending on the selected second data item.

Once a first data item has been selected for display in the first dynamic display region 302a and once a second data item, which is compatible with the first data item, has been selected for display in a second dynamic display region, only those data items from other data sets that are compatible with the first data item and the second data item are displayed in the other dynamic display regions.

In other words, in such a case, after the user has selected a first data item has been selected for display in the first dynamic display region, the other dynamic display regions will be populated with data items compatible with the first data item. Then, if a new data item is selected in a second dynamic display region, with this new data item being compatible with the first data item, then the displayed first data item in the first dynamic display region will not change.

However, after a first data item has been selected for display in a first dynamic display region, rotating a second dynamic display region 302b to display a second data item not compatible with the first data item will cause the first dynamic display region 302a to rotate to display a data item compatible with the second data item.

In other words, the user is free to independently select data items in different dynamic display regions, with the effect of the data items in the other dynamic display regions being updated to show compatible selected data items after each selection. This enables the user to explore the data items, in particular the relationships between each items. By making a number of independent selections, the user can quickly determine the relationships that making one change happens on the other data items. If the data items comprise interrelated variables, then the user can use this embodiment to explore the relationship between each variable in a dynamic way.

For example, consider example data sets A, B, C, and D as set out in Table 1 below: Table 1

| **Data set** | **Data items** |
|---|---|
| A | AI, A2, A3, A4 |
| B | Bi, B2, B3 |
| C | CI, C2, C3, C4, C5 |
| D | Di, D2, D3, D4 |

Consider that the data items in each data set can be selected only in the allowed combinations as set out below in Table 2:

| | **Data set A** | **Data set B** | **Data set C** | **Data set D** |
|---|---|---|---|---|
| Combination 1 | A1 | B2 | C4 | D2 |
| Combination 2 | A1 | B3 | C4 | D4 |
| Combination 3 | A2 | Bi | C2 | D1 |
| Combination 4 | A2 | B2 | C2 | D2 |
| Combination 5 | A2 | B3 | C5 | D3 |
| Combination 6 | A3 | B1 | C1 | D1 |
| Combination 7 | A3 | B1 | C4 | D1 |
| Combination 8 | A3 | B3 | C3 | D2 |
| Combination 9 | A3 | B3 | C3 | D3 |
| Combination 10 | A4 | Bi | C4 | D4 |

In this example, the compatibility information would indicate the relationships between each data item. Hence, in this example, the compatibility information would indicate that data item A1 in data set A is compatible with data items B2 and B3 in data set B, but only with data item C4 in data set C (see Combinations 1 and 2). Data item A1 in combination with data item B2 requires data item D2 in data set D (see Combination 1), and data item A1 in combination with data item B3 requires data item D4 in data set D (see Combination 1)

Likewise, the compatibility information would indicate that data item C5 in data set C is only compatible with data item A2 in data set A, data item B3 in data set B, and data item D3 in data set D (see Combination 10).

It will be appreciated that the compatibility information could take a number of forms and could be stored in a number of ways.

The number of data items in Table 1 and the number of combinations in Table 2 are both relatively small. It will, however, be appreciated that in many practical examples of such multivariable data, the number of data items and the number of combinations are very large. This can make it impractical for a user to obtain meaningful information about the relationships between data items if the data items are presented in a list format.

Furthermore, it may be the case that the user would not typically be presented with the combinations of data items in a single list, but in separate lists. For example, the if the data items A1, A2 and A3 in data set A represent different suppliers or manufactures, with the data items in data sets B to D being product details, then suppliers/manufactures would typically provide separate lists showing their combinations.

Hence, for example, if A1 represented a supplier, then that supplier would provide combinations B2+C4+D2 and B3+C4+D4 as options for selection (see Combinations 1 and 2). Supplier A2 would provide combinations B1+C2+D1, B2+C2+D2 and B3+C1+D3 as options for selection (see Combinations 3-5), etc.

Given these lists, the user would find it difficult, for example, to determine what factors relate data sets B, C and D. Furthermore, in this example, the relationships between data sets B, C and D vary for each supplier. For example, supplier A1 permits combination B3+C4+D4 (combination 2), whereas supplier A4 permit C4+D4 only in combination with B1 (combination 10).

In this embodiment, the compatibility information further includes an indication of the display preference of each data item within each set. Once a first data item has been selected for display in a first dynamic display region, the display is arranged to display a compatible data item in each of the other dynamic display regions in accordance with the display preference of each data item.

In other words, when a data item has been selected and there is a choice of compatible data items to display in the other dynamic display regions, the compatibility information is checked to see which data items should be displayed.

For example, in the above example, within data set A, data item A1 could have a highest preference, with data item A4 having a lowest preference. Likewise, in data sets B, C and D, data items B1, C1 and D1 could have a higher respective preference than B3, C5 and D4. Furthermore, the ranking preference of data sets A-D could be in that order, with preference given for sorting based on data set A over data set D.

In such a case, if the user selected data item B2 in data set B, then combination 1 (A1+B2+C4+D2) and combination 4 (A2+B2+C2+D2) are available for display. If the data items are first sorted via data set A, then combination 1 (A1+B2+C4+D2) would be selected over combination 4 (A2+B2+C2+D2), given that data item A1 has a higher ranking preference than data item A2.

In this way, the compatibility information includes information regarding the display preferences of each data item.

In some embodiments, the display preferences can vary depending on which data item has been most recently selected by the user.

In addition, in some embodiments, the display order of the data items within each set (e.g. when selecting one to another) may be specified in the display preferences.

In this embodiment, once the user has an appropriate set of data items, in this embodiment the user can make a selection using the select button 312.

A plurality of locking regions 308 are arranged on the display unit 204. Each locking region 308 corresponds to a particular dynamic display region 302. The input unit 214 is configured to detect when a locking region 308 has been selected by the user. Once a locking region 308a has been selected, the processor 216 is configured to lock the dynamic display region 302a corresponding to that particular locking region. More specifically, the processor 216 is configured to prevent a dynamic display region 302 from automatically rotating when another dynamic display region 302 is manipulated by the user.

Once the first data item has been selected for display in a first dynamic display region and once a command to lock the first dynamic display region has been received, only those data items in other sets that are compatible with the first data item are available for selection in the other dynamic display regions.

Hence locking a dynamic display region limits the available choices for the selection of data items in the other dynamic display regions.

If a first dynamic display region is locked, and once a second data item has been selected for display in the second dynamic display region and once a command to lock the second dynamic display region has been received, only those data items in other sets that are compatible with the first data item and the second data item are made available for selection in the other dynamic display regions.

In this embodiment, dynamic display regions can be unlocked by deselecting the appropriate locking region. Again, once the user has an appropriate set of data items, in this embodiment the user can make a selection using the select button 312.

In other words, more than one dynamic display region can be locked at any one time, enabling the user to have a greater freedom to explore the interrelations between the data items in each data set. By manipulating the data items independently, and choosing to lock/unlock dynamic display regions, the user is able to quickly establish relationships between the data items in each data set, which greatly increases the efficiency of data selection.

For example, referring again to Tables 1 and 2, if data item B1 in data set B is locked, then only data items A2, A3 and A4 would be available for selection in data set A. Likewise, only data items C1, C2 and C4 would be available for selection in data set C, and only data items D1 and D4 would be available for selection in data set D.

In this embodiment, the locking regions 308 are denoted by a padlock icon. When one of the locking regions 308 is selected, the icon will show a closed padlock. The locking regions 308 that have not been selected will be denoted by an opened padlock icon. It will be understood that checkboxes and other selection indicators may be used or other ways of indicating the locking regions 308 could be used in other embodiments of the invention.

In this embodiment, a user unlocks a dynamic display region 302 by selecting the locking region 308 for a second time. In other embodiments, a dynamic display region 302 is unlocked by manipulating the locked dynamic display region 302. In other words, a dynamic display region 302 is unlocked by attempting to select another data item in the locked dynamic display region 302.

Advantageously, this embodiment allows a user to quickly and easily find the most ideal combination of options for their needs. More particularly, the GUI is helpful for those users that have one or more predetermined options already in mind.

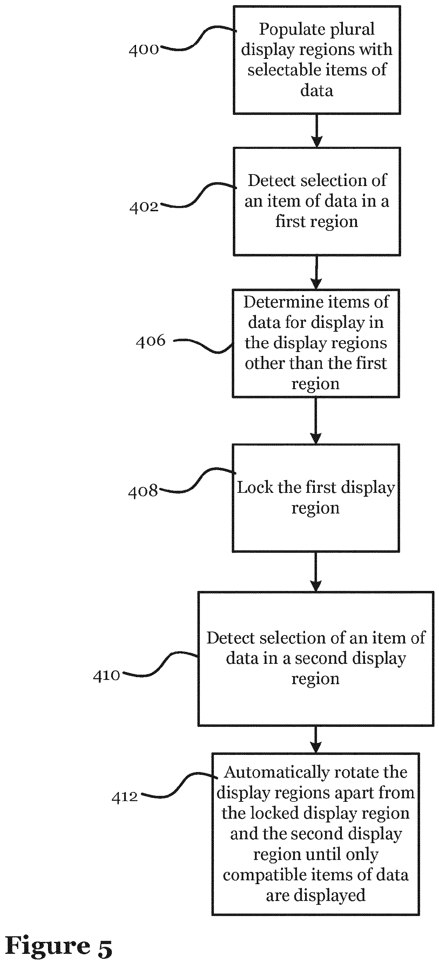

Figure 5 is a flowchart showing a method of operation of the user device 102 of Figures 3 and 4.

In a first step 400, the dynamic display regions 302 are populated with selectable data items. One data item is displayed in each dynamic display region 302. In this embodiment, the dynamic display regions display only one data item at any one moment of time, and a data item is selectable by manipulating the dynamic display region 302. In other embodiments, prior to the user making a selection, each dynamic display region 302 shows no data.

At step 402 the input unit 214 detects input from a user when the user selects one of the arrows 304, 306 in order to rotate, or scroll, one of the dynamic display regions 302. For example, as a first dynamic display region 302a is rotated, a new data item will replace the currently displayed data item in the first dynamic display region 302a. The display region 302a is rotated until the data item required by the user is displayed in the first dynamic display region 302a, thus selecting that data item.

The processor 216, in step 406, determines data items for display in the remaining dynamic display regions 302. The determining step involves calculating which data items can be selected in combination with the currently selected data item of the first dynamic display region 302a using the compatibility information.

In this embodiment, this determination occurs every time the first dynamic display region 302a is rotated, as rotating the first dynamic display region 302a is considered as making a "selection" in this embodiment of a new data item -regardless of whether this is a final selection or not.

Rotating a second dynamic display region 302b to display a data item not compatible with the data item currently selected in the first dynamic display region 302a will cause the first dynamic display region 302a to rotate to display a data item compatible with the data item selected in the second dynamic display region 302a. On the other hand, rotating the second dynamic display region 302a to display a data item compatible with the data item currently selected in the first dynamic display region 302a will not result in the first dynamic display region 302a being caused to rotate.

At step 408, the user decides to lock the first display region. Following this, the input unit 214 detects the selection of the locking device 308a associated with the first dynamic display region 302a. The user selects the locking device 308 for a plurality of dynamic display regions 302, thereby preventing those dynamic display regions 302 from automatically rotating when data items in other display regions are selected.

At step 410 the input unit 240 detects that the user has selected to rotate the second dynamic display region 302b. The data item presently displayed in the second dynamic display region 302b is then replaced with the next data item in a sequence of data items associated with that display region 302a.

At step 412 the processor 216 determines the data items in the remaining dynamic display regions 302c-f that are compatible with the data items in the locked and presently selected dynamic display regions 302a-b. The unlocked dynamic display regions 302c-f automatically rotate to display the compatible data.

If a data item presently displayed in one of the remaining dynamic display regions 302c-f cannot be selected in combination with the data item presently displayed in the first dynamic display region 302b and the second dynamic display region 302a, the dynamic display region showing the incompatible data is automatically rotated, or rolled until it displays a data item that is selectable in combination with the data item displayed in the first dynamic display region 302b and second dynamic display region 302a.

In this embodiment, the display unit 204 is configured to display a select button 312. Receiving a detection of the selection the select button 312 reconfigures the display unit 204 to display information about the configuration presently selected represented by the data items displayed in dynamic display regions 302. The information may be stored in the memory 212. Alternatively, the information may be obtained from the external network 104. For example, the information may be a product specification or image. In other embodiments, the selection of the particular combination of displayed data items may trigger an alternative action. In other embodiments, no a select button 312 need be present.

In some embodiments, the database 206 can store selection information regarding the selections made by the user. In other words, the database 206 can store information relating to the order of selections and/or the frequency of selection. By doing this, the database 206 can store information that provides an indication of which data or combinations of data the user considers to be important.

This selection information can be sent by the communication unit 210 to the distributer 106. For example, it could then be used to update the display preferences found in the compatibility information.

As discussed above data items can be locked. In such embodiments, if the input unit receives a command to change the data item presently displayed in an unlocked dynamic display region that has no other compatible data items available for selection in combination with the data items selected in the or each locked dynamic display region, then the display may be configured to indicate a dynamic display region to unlock.

In such a situation, the processor 216 may be configured to determine a locked dynamic display region to unlock, and the display 204 may be configured to indicate the determined dynamic display region to unlock. For example, the processor 216 may be configured to calculate the number of compatible data items that will become available for selection if each of the locked dynamic display regions is unlocked independently, and determine the locked dynamic display region to unlock to be the dynamic display region that yields the greatest number of compatible data items for selection if it were unlocked.

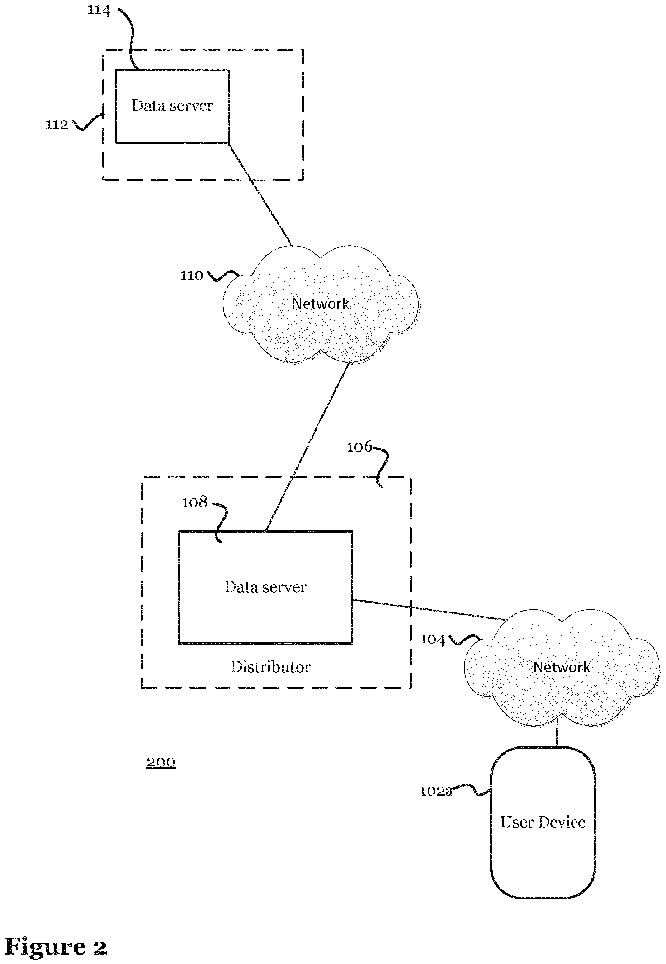

Figure 2 shows a system 200 according to another embodiment of the present invention. In the system 200, a user device 102 is connected to a first network 104. The user device 102 is as described above with reference to Figure 3. In this embodiment, the first network 104 is a local network, e.g. a WiFi network. In other embodiments, the first network 104 may be an external network such as the Internet.

The network 104 is coupled to a distributer 106. In this embodiment, the distributer 106 is further coupled to a second network 110 so that it can communicate with an information provider 112. The second network 110 may be an internal or external network. For example, in this embodiment, the second external network 110 is the Internet. Alternatively, the second external network 110 may be a private network accessible only to the distributer 106 and the information provider 112.

The information provider 112 comprises a data server 114.

The embodiment of Figure 2 works in the same way as the above mentioned embodiments discussed in relation to Figure 1. In other words, the user device 102 is provided information relating to the data items and compatibly information by the distributer 106. However, in this case, the information relating to the data items and compatibly information is provided to the distributer 106 by the data server 112 of the information provider 112.

Information may be provided to the distributer 106 by the information provider 112 on a periodic schedule. Alternatively, information may be provided when a change to the data items and/or compatibly information is made. The data server 108 of the distributer 106 may be configured to pull data from the data servers 114 of the information providers 112. Alternatively, the data servers 114 of the information provider 112 may be configured to push information to the data server 108.

Furthermore, in some such embodiments, there may be a number of information providers 112, each providing some of the data items to the information relating to the data items and compatibly information is provided to the distributer 106.

In the above mentioned embodiments, the user device 102 comprises a database 206 arranged to store the data items and the compatibility information, and a processor 216 for determining compatible data items when a selection is made. Hence, in the above mentioned embodiments, the data storage and processing is done locally on the user device.

However, in other embodiments, the user device may simply display a user interface, and receive a user selection of a data item for display in a dynamic display region. The user device could then send an external apparatus (e.g. the distributer 106) information relating to the user selection of the selected data item, receiving back from the external apparatus information relating to which data items in the other sets are compatible with the first data item. Hence, in such embodiments, the data storage and processing could be done remotely from the user device. In such embodiments, the user device could, for example, display a GUI in a web browser or other application.

In some embodiments, the user device 102 need not have a communication unit 210. In such embodiments, the user device does not need to communicate with the distributer 106.

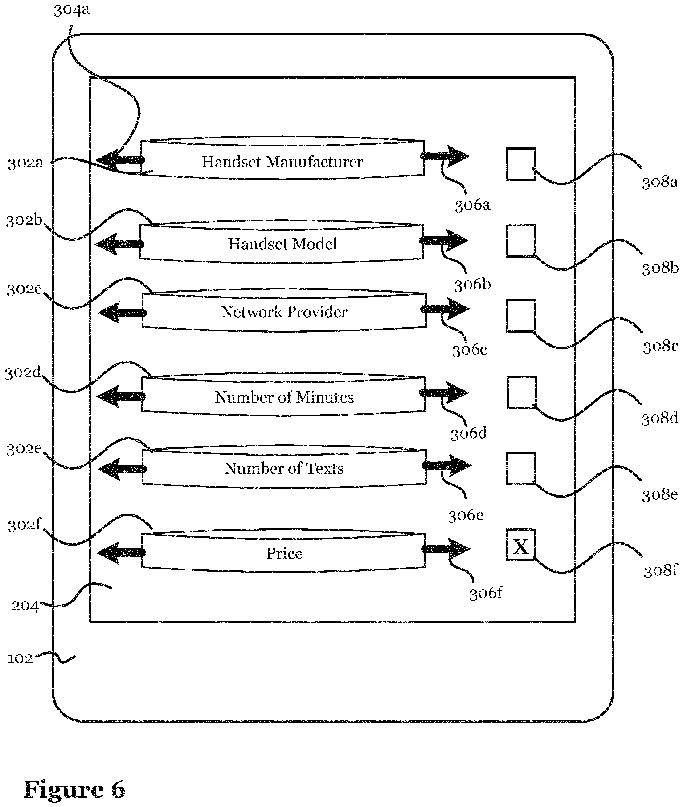

An example of an implementation of a GUI for user device 102 as used in the system of Figure 1 is shown in Figure 6. Here, the user is a consumer looking to purchase a new mobile phone and contract. The device and contract together is could be considered as a bundle, and the bundle comprises a calltime allowance (number of minutes), and an SMS allowance (number of texts) offered as a monthly tariff (i.e. price). Each network provider will have their own sets of monthly tariffs available for a number of different mobile phones.

Consider an example in which the user knows that they require 2000 free text (SMS) messages per month, and the consumer has a maximum budget of £24 per month. The consumer has no other preferences, but would like to know what handsets are available to them with these options being part of the bundle.

In a typical mobile phone shop, next to where each mobile phone is displayed in the shop there will be an array of datasheets showing the various contract combinations offered by a network provider.

Consider that the user decides on a certain mobile phone handset that is available from a number of different network providers. In such a case, in order to obtain the full set of information, the user would have to look through all of the datasheets, finding those contracts available for the chosen mobile phone handset, seeing whether those meets the criteria of 2000 free text (SMS) messages per month at a maximum budget of £24 per month.

The user may decide there is not an appropriate contract for them, and so they will need to decide on a different mobile phone to purchase and start the process again. Embodiments of the present invention has the advantage of helping the user browse efficiently for a combination of mobile phone and contract options that best suits their needs.

In this example, the distributer 106 is a sales outlet which sells a plurality of bundles associated with a plurality of network providers 112. The user device 102 is a mobile communications device comprising a communications unit 210.

The consumer launches the application 218 to display the GUI on the display 204 of his mobile communication device 102. The dynamic display regions 302 represent a stacked array of rollers. The topmost roller 302a is configured to show handset manufacturers. The next roller 302b is configured to show handset models. The next roller 302c is configured to show network providers. The next roller 302d is configured to show the number of calltime minutes per month. The next roller 302e is configured to show the number of text messages per month. The bottommost roller 302f is configured to show the monthly contract price.

As an example, in a first step, the user may choose the monthly contract price that they would ideally like to pay. In this example, to achieve this, the consumer selects the right hand arrow 306f and rotates the sixth roller 302f until "£24" is displayed.

Following this, the remaining five rollers 302 are immediately populated with a respective data item that is compatible with the £24 contract price. In this embodiment, the remaining five rollers 302 are populated with data items according to stored display preferences. In this embodiment, the stored display preferences indicate that for a given price, the combinations of data items with the maximum number of minutes is chosen as a first priority, with combinations of data items with the a certain handset chosen as a second priority.

The consumer then locks the sixth roller by selecting the locking icon 308f on the GUI. The processor 216 activates a locking mechanism that prevents the sixth roller 302f from automatically rolling and displaying a new price if selections on the other rollers are made.

The user then selects the number of text messages per month that they require. In this example, to achieve this, the consumer selects the right hand arrow 306e and rotates the fifth roller 302e until "2000 texts" is displayed. Simultaneously, the remaining four rollers 302 (i.e. the rollers apart from the locked roller 302f and the roller 302e currently being manipulated) are immediately populated with a data item that is compatible with the £24 contract price and 2000 SMS messages.

The consumer then locks the fifth roller by selecting the locking icon 308e on the GUI.

Once the fifth roller 302e is locked on 2000 SMS messages, the user can scroll the second roller 302b to see which handsets are available to him with the options he has chosen in fifth and sixth rollers 302e, 302f.

Therefore, the consumer has been assisted in deciding on the bundle of mobile communications device and contract that they would like to purchase, because they are now more aware of the handsets available to them with the bundle features that they require.

This embodiment is advantageous to users that need to make a decision when there are many permutations of configurations to decide from but the user has an initial idea of which features of the configurations they require. The user is free to independently select data items in different dynamic display regions, with the effect of the data items in the other dynamic display regions being updated to show compatible selected data items after each selection. This enables the user to explore the data items, in particular the relationships between each items.

The compatibility information may contain information relating to compatibility between things the user is using to search with - e.g. it could make it easier to help the user locate the right combination of items (e.g. a deal selection) in the big data set by ensuring that we manage relationships between things that can be search together.

The compatibility information may also contain information of compatibility between products in deals - this allows, for example, a retailer to ask a few simple questions and the retailer can manage the compatibility between all complex products to show the deals that match and show you what they come with and what they can come with.

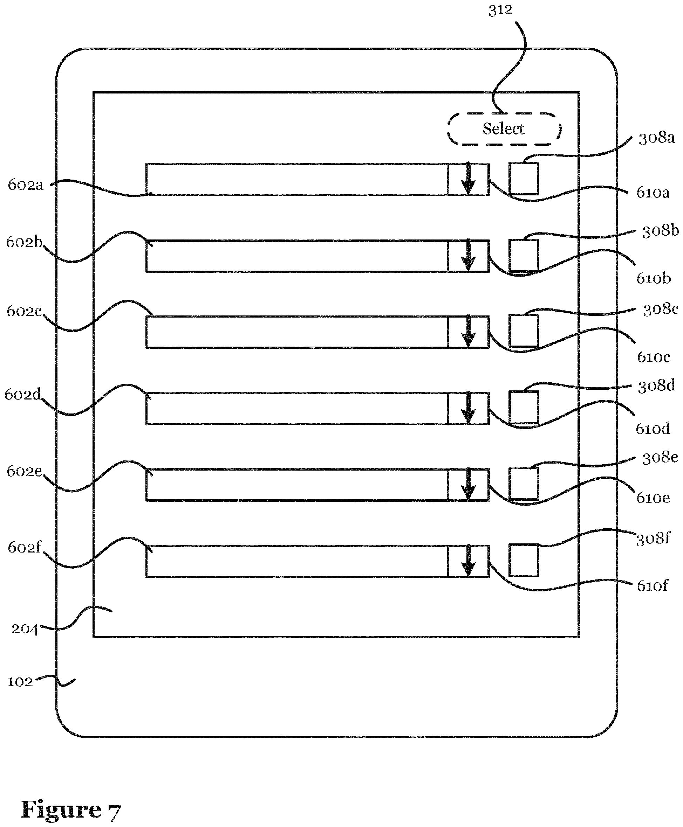

Figure 7 shows a Graphical User Interface (GUI) according to an embodiment of the present invention for displaying on the display unit 204 of the user device 102 in a system of Figure 1.

Here, the dynamic display regions 602 are not represented by rollers like in Figure 4. Instead, the dynamic display regions 602 are represented by drop down lists. A drop down selector 610 on the GUI allows the user to make a selection of a data item associated with each dynamic display region 602.

When a drop down selector 610 is selected, a user is able to choose a data item from a displayed list of data items for that dynamic display region. The list may comprise a scroll bar if there are too many data items to fit on the display unit 204. In other words, if a long list of data items needs to be presented which is too long to fit on the screen, a scroll bar is but at the side of the list so the user can scroll down.

The selected data item is then displayed in the associated dynamic display region 602. A locking device 308 can be used to prevent a new data item automatically appearing in that particular dynamic display region 602 when a data item is selected in a different dynamic display region 602.

As described above, the user can initially make a selection in any dynamic display region 602. More specifically, the user does not need to start with the dynamic display region 602 that displays the broadest, or highest level, category of data items.

The list of data items that is displayed upon selecting the drop down selector 610 may be arranged in a certain order as specified in the display preferences.

Data items for selection from data sets may be highlighted if they are compatible with the selected first data item. This allows a user to see which options they can select both with and without changing the first selected data item. Highlighting may include
changing the colour of the text representing the data item, or changing the font of the text representing the data item.

The display unit 204 may include a select button 312. Receiving a detection of the selection the select button 312 reconfigures the display unit 204 to display information about the configuration presently represented by the data items displayed in the dynamic display regions 602. The information may be stored in the memory 212. Alternatively, the information may be obtained from the external network 104. For example, the information may be a product specification or image.

The user device operates substantially as described above with reference to Figure 5.

Another example of an implementation of the user device 102 will now be described. Here, the user is a consumer looking to purchase a new car. The consumer knows that they require alloy wheels for less than £35,000. The consumer would quite like a certain car model but this is not essential and they are open to other ideas if it means they can have the alloy wheels for less than £35,000. The distributer 106 is a sales outlet, CarTrader, which sells cars from a variety of manufacturers. The user device 102 is a PC with a means for accessing the internet.

The consumer opens a web browser on his user device 102 and navigates to the CarTrader webpage. The webpage comprises the GUI. The dynamic display regions 602 represent a stacked array of text boxes as shown in Figure 7. In this example, the user device 102 is in a system of the type shown in Figure 2 in which there are a number of information providers 112.

In this example there are six dynamic display regions 602 representing the various aspects of cars. The six dynamic display regions are associated with data sets including car class, car manufacturer, model, exterior colour, type of wheels and price.

CarTrader's data server 108 is regularly updated with cars, configurations, and prices from a plurality of car manufacturer, with each car manufacturer being an information provider 112 as shown in Figure 2.

In this embodiment, the user device 102 does not communicate with the information providers 112 via a telecoms network 118. Furthermore, since the GUI is maintained by CarTrader, car information (i.e. the data items themselves) is not sent to the user device 102. Instead, the user device 102 accesses the data server 108 via the webpage, and the processing of compatible data items is done on the distributer 106.

In a first step, the user clicks a drop down selector 61of. A list of prices appears on the display. The user scrolls down the list and selects a price of £35,000. The list then doses and "£35,000" is displayed in the display region 602f representing price. As this is one of the key options that the user requires in their configuration, they select the locking region 308f associated with the selected dynamic display region 602f.

The user device 102 sends the distributer 106 information on this selection, and the distributer 106 determines compatible data items for display in the remaining display regions 602. The determined data items for display are only those data items that can be selectable in a configuration costing no more than £35,000.

In a second step the consumer selects alloy wheels, with wheel type being associated with a second dynamic display region 602e. The distributer 106 then determines the remaining unlocked dynamic display regions 602, other than the second dynamic display region 602e, using compatible data items. The user then locks the second display region by selecting the locking region 308e.

In a third step the consumer selects an exterior colour of luminous pink, with exterior colour being associated with a third dynamic display region 602d. The distributer 106 then determines the remaining unlocked dynamic display regions 602, other than the third dynamic display region 602d, using compatible data items. The user then locks the third dynamic display region 602d.

At this stage, the dynamic display region 602b representing car model shows a car model that is compatible with the locked (i.e. the first, second and third) dynamic display regions. In this example, there is only one car model available for the locked price, locked wheel choice, and in the locked colour.

In this embodiment, if the user tries to select a different car model, then the processor 216 will determine that there is no other "car model" selection that is compatible with the locked price, locked wheel choice, and in the locked colour. As a result, in this embodiment, the distributer 106 suggests unlocking the display region 602d representing exterior colour.

This results in more options becoming available to the consumer, one of which is the car model of the user's choice under the drop down selector 610b associated with the dynamic display region 602b representing car model.

This embodiment is advantageous in situations where there are many data items (options) in one particular category. It would be difficult, or frustrating, for a user to roll through many options using the roller application described with reference to Figures 4, 5 and 6. The drop down lists make it easier for the user to select the options they want.

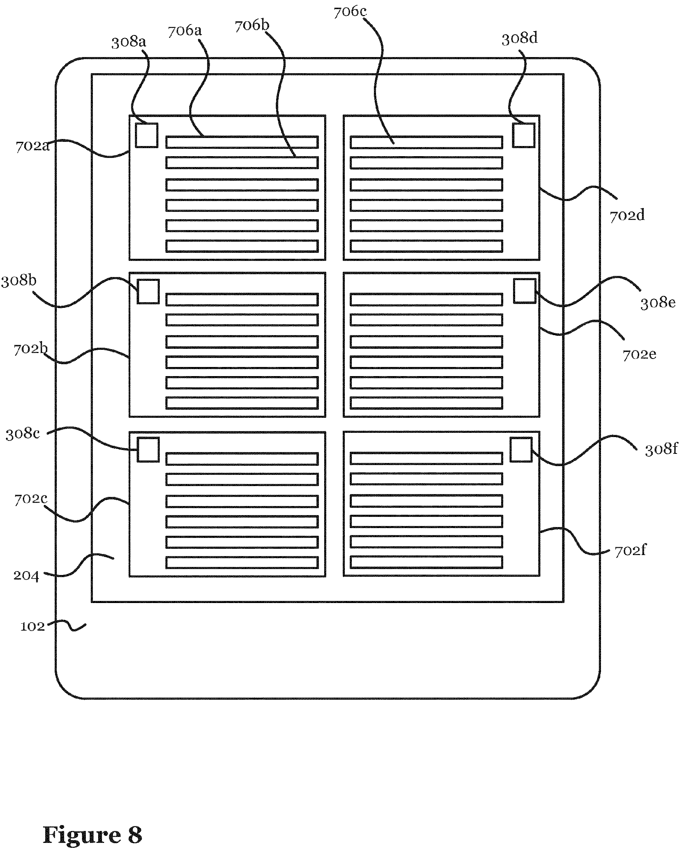

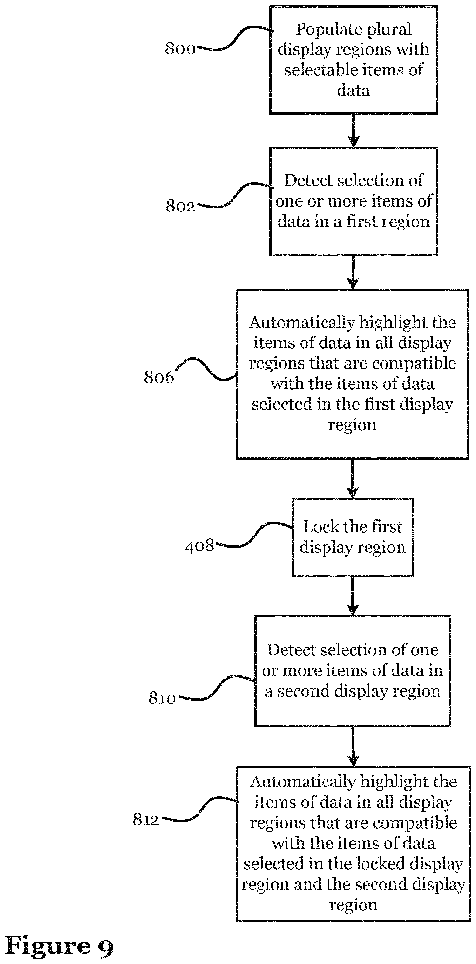

The embodiments disclosed in Figures 8 and 9 in the description are not part of the invention and are present for illustrative purposes only.

Figure 8 shows a Graphical User Interface (GUI) according to another embodiment of the present invention for displaying on the display unit 204 of the user device 102.

Here, the plurality of dynamic display regions 702 are larger than in previously described embodiments and capable of displaying more than one data item 706 at any one moment of time.

In this embodiment, the user is presented with a plurality of data items 706 in each data set at any one time, although initially the user will not know which data items can be selected in combination with other data items. If there are many data items, scroll bars are displayed in each display region 702 that can be used to scroll through display items so that all of the data items can be displayed for selection.

When a user selects a data item 706a in a first display region 702a, the data items 706 in other display regions 702 that are compatible with the first data item 706a are highlighted. For example, if a provider 112 has offered a product that is configurable with a first data item 706a and a second data item 706c, then the second data item 706c will be highlighted when the first data item 706a is selected. Conversely, if the product is not configurable with the second data item 706c and a third data item 706b, then the second data item will not be highlighted when the third data item 706b is highlighted.

Highlighting may involve a wide variety of means. For example, highlighting may involve changing the text style in which the data items 706 are displayed. Alternatively, the background and area around the available data items 706 may coloured a different colour to the rest of the dynamic display region 702. Alternatively again, the available data items 706 may be highlighted by being displayed in bold text. It would be clear to the person skilled in the art that this is a non-exhaustive list.

Figure 9 is a flowchart showing a method of operation of the user device 102 of Figures 3 and 8.

In a first step 800, the dynamic display regions 702 are populated with selectable data items 706. Each dynamic display region 702 is configured to display plural data items at any one instant.

At step 802, the input unit 214 detects selection of one or more data items 706 in a first display region 702a. In this embodiment, the data items 706 are selectable directly, for example by being clicked on. When a data item is selected by the user, the display unit 204 highlights that data item.

At step 806 the processor 216 is configured to automatically highlight the data items in all display regions 702 that are compatible with the data items selected in the first display region 702a.

At step 408, when the required data items are selected in the first display region 702a, the input unit 214 detects the selection of the locking device 308b associated with the first display region 702a. The user may select the locking device 308 for a plurality of display regions 702, thereby preventing the highlighted data items from becoming unavailable.

At step 810 the input unit 214 detects selection of one or more data items in a second display region 702d. The second display region 702d may contain data items that are broader than the data items in the first display region 702a. Alternatively, the data items contained in the second display region 702d may be narrower than those contained in the first display regions 702a. The selection takes any of the forms previously described.

At step 812, the processor 216 is configured to automatically highlight the data items in all display regions 702 that are compatible with the data items selected in the first, locked, display region 702a and in the second display region 702d.

If the processor 216 determines that there are no other possible combinations of data items due to the display regions 702 that have been locked, the processor 216 controls the display unit 204 to display a message to the user. In a preferred embodiment, the message may be a suggestion of a locked display region 702 to unlock. Alternatively, the message may be an indication that there are no further options available for the user's choice of preferences.

It is to be appreciated that the user can also deselect data items in any display region 702 in order to increase the number of options.

In some embodiments, the data used by the apparatus (e.g. any one or more of the data items, compatibly information, and the display preferences) may be dynamically changed (replaced, limited, reordered etc) as a result of a number of factors, e.g. as a result of data obtained as a result of the user activity or any other data - weather, time, stock availability etc or combination thereof. In some embodiments, the data used by the apparatus (e.g. any one or more of the data items, compatibly information, and the display preferences) may be dynamically changed while the user is making selections.

In some embodiments, the apparatus is arranged to send user selections to an external device (e.g. a network server). The external device may for example use the user selections to alter the data items associated with the dynamic display regions and/or the compatibility information on the apparatus. In other embodiments, the apparatus can use the user selections to alter the data items associated with the dynamic display regions and/or the compatibility information based on the user selections.

In some embodiments, the data items associated with the dynamic display regions can be changed based on location of the user. For example, in some embodiments of the invention the apparatus can comprise a location determination unit (e.g. a GPS device) configured to determine the user's location, and a communication unit for communicating with a network server storing data items associated with a plurality of locations. In such embodiments, the apparatus can be populated with data items associated with a first location, and when the location determination unit determines that the user has entered a second location, the communication unit is configured to communicate with the network server and download data items associated with the second location from the server.

The compatibility information may contain information relating to compatibility between things the user is using to search with - e.g. it could make it easier to help the user locate the right combination of items (e.g. a deal selection) in the big data set by ensuring that we manage relationships between things that can be search together.

In some embodiments, the apparatus may send the user's selection to an external apparatus. Hence, in such embodiments, the apparatus can be used to make a complex selection (e.g. including a large number of interrelated variables) in a quick way. By using this, the speed of making a selection is increased. For example, embodiments of the invention could be used in a back office environment of a retailer. The retailer could have certain offers and editing those offers could take time. Using a conventional system finding a particular offer to edit may take considerable time. However, using an apparatus according to an embodiment of the invention, a particular deal (or offer) could be located quickly, by means of the dynamic display regions only showing compatible data items. Therefore, the user could quickly (e.g. by starting out with some of the deal parameters) find the particular deal that they wish to edit in a very quick way.

The claimed method could be carried out on a single a (e.g. a PC, tablet, smart phone or other suitable device), or different elements of the method could be provided on separate apparatuses (e.g. PC and server).

The invention also provides a computer readable medium carrying computer readable code for controlling an apparatus to carry out the method of the above mentioned embodiments.

It will be appreciated that the hardware used by embodiments of the invention can take a number of different forms. For example, all the components of the apparatus could be provided by a single device (e.g. a PC, tablet, smart phone or other suitable device), or different components of the apparatus could be provided on separate devices (e.g. PC and server). Hence, it will be appreciated that embodiments of the invention can provide an apparatus that comprises one device or several devices in communication.

## Claims

1. An apparatus for assisting a user in selecting a plurality of compatible data items comprising:
a display (204) arranged to display a plurality of dynamic display regions (302a-f) each dynamic display region being associated with a respective set of data items for display, the data items being associated with compatibility information, wherein the data items in each data set can only be selected in allowed combinations and the compatibility information indicates which items in each data set are compatible with which items in the other data sets; and
an input unit (214) arranged to receive a user selection of a data item for display in a dynamic display region, wherein the dynamic display regions (302a-f) are independently selectable using the input unit;
wherein, when a data item is selected for display in a given dynamic display region (302a), the display (204) is updated to display a respective data item which is compatible with the selected data item in each of the other dynamic display regions (302b-f); and
wherein, following selection of the data item in the given dynamic display region, and subsequent selection of an incompatible data item in a further dynamic display region, the display is updated to display a compatible data item in the given dynamic display region,
wherein the incompatible data item is not compatible with the data item and the compatible data item is compatible with the incompatible data item,
wherein the display (204) is further arranged to display a plurality of locking regions (308a-f), each locking region (308a-f)
being associated with a respective one of the plurality of dynamic display regions (302a-f),
and wherein the input unit (214) is further arranged to detect a selection by the user of a locking region (308a) associated with the given dynamic display region (302a) to lock the given dynamic display region; and
wherein, once the data item is selected for display in the given dynamic display region (302a) and once the selection by the user of the locking region (308a) associated with the given dynamic display region (302a) is received, only those data items in other sets that are compatible with said data item are available for selection in the other dynamic display regions (302b-f).

2. The apparatus of claim 1, further comprising:
a datastore (206) arranged to store the compatibility information;
a processor (216) arranged to determine, when a data item in a dynamic display region is selected for display, which data items in the other sets are compatible with the data item using the compatibility information.

3. The apparatus of claim 2, further comprising:
a communication unit (210) arranged to communicate with an external apparatus,
wherein the communication unit (210) is arranged to receive information relating to the sets of data items associated with the dynamic display regions (302a-f) and the compatibility information from the external apparatus.

4. The apparatus of claim 1, further comprising:
a communication unit (210) arranged to communicate with an external apparatus arranged to store compatibility information relating to how each data item in each set is compatible with the data items in the other sets;
wherein the communication unit (210) is arranged to send the external apparatus information relating to the user selection of the data item;
wherein the communication unit (210) is arranged to receive from the external apparatus information relating to which data items in the other sets are compatible with the data item

5. An apparatus according to any one of claims 1 to 4, wherein once the data item has been selected for display in the given dynamic display region and once a second data item, which is compatible with the data item, has been selected for display in a second dynamic display region, only those data items from other data sets that are compatible with the data item and the second data item are displayed in the respective other dynamic display regions.

6. An apparatus according to claim 5, wherein once the second data item has been selected for display in the second dynamic display region and once a third data item, which is compatible with the second data item, has been selected for display in a third dynamic display region, only those data items from other data sets that are compatible with the second data item and the third data item are displayed in the respective other dynamic display regions;
optionally wherein when the third data item is not compatible with the data item, the data item displayed in the given dynamic display region is replaced by a fourth data item that is compatible with the second and third data items.

7. An apparatus according to any one of claims 5 to 6,
wherein once the second data item has been selected for display in the second dynamic display region and once a command to lock the second dynamic display region has been received, only those data items in other sets that are compatible with the data item and the second data item are available for selection in the other dynamic display regions.

8. An apparatus according to claim 7, wherein if the input unit receives a command to change a data item presently displayed in an unlocked dynamic display region that has no other compatible data items available for selection in combination with the data items selected in the or each locked dynamic display region, the display (204) is configured to indicate a dynamic display region to unlock.

9. An apparatus according to claim 8, wherein the processor (216) is configured to determine a locked dynamic display region to unlock, and the display (204) is configured to indicate the determined dynamic display region to unlock,
optionally wherein the processor (216) is configured to:
calculate the number of compatible data items that will become available for selection if each of the locked dynamic display regions is unlocked independently, and
determine the locked dynamic display region to unlock to be the dynamic display region that yields the greatest number of compatible data items for selection if it were unlocked.

10. The apparatus according to any one of the preceding claims,
wherein the compatibility information further includes an indication of the display preference of each data item within each set, and
wherein, once the data item has been selected for display in the given dynamic display region, the display is arranged to display a compatible data item in each of the other dynamic display regions in accordance with the display preference of each data item;
optionally wherein the display preference are arranged to be updated based on information of user selections.

11. The apparatus according to any one of the preceding claims, wherein once the data item has been selected for display in the given dynamic display region, data items displayed for selection in other dynamic display regions are displayed in first manner if they are compatible with the data item and in a second manner if they are not compatible with the data item

12. The apparatus according to any one of the preceding claims, wherein the input unit (214) comprises the display (204), and wherein the display is a touch screen.

13. The apparatus according to any one of the preceding claims, wherein the display (204) is arranged to display the data items in the dynamic display region as scroll wheels, and the input unit (214) is arranged to receive a user selection of a data item for display in a dynamic display region by scrolling the scroll wheel of the dynamic display region.

14. The apparatus according to any one of the preceding claims, further comprising:
a location determination unit configured to determine the user's location; and
a communication unit (210) for communicating with a network server storing data items associated with a plurality of locations,
wherein the apparatus is populated with data items associated with a first location, and wherein when the location determination unit determines that the user has entered a second location, the communication unit (210) is configured to communicate with the network server and receive data items associated with the second location from the server;
optionally wherein the communication unit (210) is configured to transmit information about the user selections to the network server.

15. A method, in an apparatus comprising a display (204) and an input unit (214),
for assisting a user in selecting a plurality of compatible data items comprising:
displaying, by the display (204), a plurality of dynamic display regions (302a-f) and a plurality of locking regions (308a-f),
each dynamic display region being associated with a respective set of data items for display, the data items being associated with compatibility information, wherein the data items in each data set can only be selected in allowed combinations and the compatibility information indicates which items in each data set are compatible with which items in the other data sets, and wherein each locking region (308a-f) is associated with a respective one of the plurality of dynamic display regions (302a-f); and
receiving, by the input unit (214), a user selection of a data item for display in a dynamic display region wherein the dynamic display regions are independently selectable using the input unit;
wherein, when a data item is selected for display in a given dynamic display region (302a), the method comprises updating the display to display a respective data item which is compatible with the data item in each of the other dynamic display regions (302b-f); and
wherein, following selection of the data item in the given dynamic display region, and subsequent selection of an incompatible data item in a further dynamic display region, the display is updated to display a compatible data item in the given dynamic display region,
wherein the incompatible data item is not compatible with the data item and the compatible data item is compatible with the incompatible data item,
the method further comprising:
detecting, by the input unit (214), a selection by the user of a locking region (308a) associated with the given dynamic display region (302a) to lock the given dynamic display region (302a); and
locking the given dynamic display region (302a), wherein once the data item is selected for display in the given dynamic display region (302a) and once the selection by the user of the locking region (308a) associated with the given dynamic display region (302a) is received, only those data items in other sets that are compatible with said data item are available for selection in the other dynamic display regions (302b-f).

16. A computer readable medium carrying computer readable code for controlling an apparatus to carry out the method of claim 15.

## Patentansprüche

1. Eine Vorrichtung zum Assistieren eines Benutzers beim Auswählen einer Vielzahl von kompatiblen Datenelementen, beinhaltend:
eine Anzeige (204), die eingerichtet ist, um eine Vielzahl von dynamischen Anzeigeregionen (302a-f) anzuzeigen, wobei jede dynamische Anzeigeregion mit einem jeweiligen Satz Datenelemente zur Anzeige assoziiert ist, wobei die Datenelemente mit Kompatibilitätsinformationen assoziiert sind, wobei die Datenelemente in jedem Datensatz nur in erlaubten Kombinationen ausgewählt werden können und die Kompatibilitätsinformationen angeben, welche Elemente in jedem Datensatz mit welchen Elementen in den anderen Datensätzen kompatibel sind; und
eine Eingabeeinheit (214), die eingerichtet ist, um eine Benutzerauswahl eines Datenelements zur Anzeige in einer dynamischen Anzeigeregion zu empfangen, wobei die dynamischen Anzeigeregionen (302a-f) unter Verwendung der Eingabeeinheit unabhängig auswählbar sind;
wobei, wenn ein Datenelement zur Anzeige in einer gegebenen dynamischen Anzeigeregion (302a) ausgewählt wird, die Anzeige (204) aktualisiert wird, um ein jeweiliges Datenelement anzuzeigen, das mit dem ausgewählten Datenelement in jeder der anderen dynamischen Anzeigeregionen (302b-f) kompatibel ist; und
wobei, nach einer Auswahl des Datenelements in der gegebenen dynamischen Anzeigeregion und einer nachfolgenden Auswahl eines inkompatiblen Datenelements in einer weiteren dynamischen Anzeigeregion, die Anzeige aktualisiert wird, um ein kompatibles Datenelement in der gegebenen dynamischen Anzeigeregion anzuzeigen, wobei das inkompatible Datenelement nicht mit dem Datenelement kompatibel ist und das kompatible Datenelement mit dem inkompatiblen Datenelement kompatibel ist,
wobei die Anzeige (204) ferner eingerichtet ist, um eine Vielzahl von Sperrregionen (308a-f) anzuzeigen, wobei jede Sperrregion (308a-f) mit einer jeweiligen der Vielzahl von dynamischen Anzeigeregionen (302a-f) assoziiert ist, und wobei die Eingabeeinheit (214) ferner eingerichtet ist, um eine Auswahl, durch den Benutzer,
einer mit der gegebenen dynamischen Anzeigeregion (302a) assoziierten Sperrregion (308a), um die gegebene dynamische Anzeigeregion zu sperren, zu detektieren; und
wobei, nachdem das Datenelement zur Anzeige in der dynamischen Anzeigeregion (302a) ausgewählt wurde und nachdem die Auswahl, durch den Benutzer, der mit der gegebenen dynamischen Anzeigeregion (302a) assoziierten Sperrregion (308a) empfangen wurde, nur jene Datenelemente in anderen Sätzen, die mit dem Datenelement kompatibel sind, zur Auswahl in den anderen dynamischen Anzeigeregionen (302b-f) verfügbar sind.

2. Vorrichtung gemäß Anspruch 1, ferner beinhaltend:
einen Datenspeicher (206), der eingerichtet ist, um die Kompatibilitätsinformationen zu speichern;
einen Prozessor (216), der eingerichtet ist, um unter Verwendung der Kompatibilitätsinformationen zu bestimmen, wenn ein Datenelement in einer dynamischen Anzeigeregion zur Anzeige ausgewählt wird, welche Datenelemente in den anderen Sätzen mit dem Datenelement kompatibel sind.

3. Vorrichtung gemäß Anspruch 2, ferner beinhaltend:
eine Kommunikationseinheit (210), die eingerichtet ist, um mit einer externen Vorrichtung zu kommunizieren,
wobei die Kommunikationseinheit (210) eingerichtet ist, um Informationen in Bezug auf die Sätze Datenelemente, die mit den dynamischen Anzeigeregionen (302a-f) assoziiert sind, und die Kompatibilitätsinformationen von der externen Vorrichtung zu empfangen.

4. Vorrichtung gemäß Anspruch 1, ferner beinhaltend:
eine Kommunikationseinheit (210), die eingerichtet ist, um mit einer externen Vorrichtung zu kommunizieren, die eingerichtet ist, um Kompatibilitätsinformationen in Bezug darauf, wie jedes Datenelement in jedem Satz mit den Datenelementen in den anderen Sätzen kompatibel ist, zu speichern;
wobei die Kommunikationseinheit (210) eingerichtet ist, um der externen Vorrichtung Informationen in Bezug auf die Benutzerauswahl des Datenelements zu senden;
wobei die Kommunikationseinheit (210) eingerichtet ist, um von der externen Vorrichtung Informationen in Bezug darauf, welche Datenelemente in den anderen Sätzen mit dem Datenelement kompatibel sind, zu empfangen.

5. Vorrichtung gemäß einem der Ansprüche 1 bis 4, wobei, nachdem das Datenelement zur Anzeige in der gegebenen dynamischen Anzeigeregion ausgewählt worden ist und nachdem ein zweites Datenelement, das mit dem Datenelement kompatibel ist, zur Anzeige in einer zweiten dynamischen Anzeigeregion ausgewählt worden ist, nur jene Datenelemente von anderen Datensätzen, die mit dem Datenelement und dem zweiten Datenelement kompatibel sind, in den jeweiligen anderen dynamischen Anzeigeregionen angezeigt werden.

6. Vorrichtung gemäß Anspruch 5, wobei, nachdem das zweite Datenelement zur Anzeige in der zweiten dynamischen Anzeigeregion ausgewählt worden ist und nachdem ein drittes Datenelement, das mit dem zweiten Datenelement kompatibel ist, zur Anzeige in einer dritten dynamischen Anzeigeregion ausgewählt worden ist, nur jene Datenelemente von anderen Datensätzen, die mit dem zweiten Datenelement und dem dritten Datenelement kompatibel sind, in den jeweiligen anderen dynamischen Anzeigeregionen angezeigt werden;
wobei optional, wenn das dritte Datenelement nicht mit dem Datenelement kompatibel ist, das in der gegebenen dynamischen Anzeigeregion angezeigte Datenelement durch ein viertes Datenelement, das mit dem zweiten und dritten Datenelement kompatibel ist, ersetzt wird.

7. Vorrichtung gemäß einem der Ansprüche 5 bis 6, wobei, nachdem das zweite Datenelement zur Anzeige in der zweiten dynamischen Anzeigeregion ausgewählt worden ist und nachdem ein Befehl empfangen worden ist, um die zweite dynamische Anzeigeregion zu sperren, nur jene Datenelemente in anderen Sätzen, die mit dem Datenelement und dem zweiten Datenelement kompatibel sind, zur Auswahl in den anderen dynamischen Anzeigeregionen verfügbar sind.

8. Vorrichtung gemäß Anspruch 7, wobei, falls die Eingabeeinheit einen Befehl empfängt, um ein gegenwärtig in einer entsperrten dynamischen Anzeigeregion, die keine anderen kompatiblen Datenelemente zur Auswahl in Kombination mit den in der oder jeder gesperrten dynamischen Anzeigeregion ausgewählten Datenelementen aufweist, angezeigtes Datenelement zu ändern, die Anzeige (204) dazu konfiguriert ist, eine dynamische Anzeigeregion anzugeben, die zu entsperren ist.

9. Vorrichtung gemäß Anspruch 8, wobei der Prozessor (216) dazu konfiguriert ist, eine gesperrte dynamische Anzeigeregion, die zu entsperren ist, zu bestimmen, und die Anzeige (204) dazu konfiguriert ist, die bestimmte dynamische Anzeigeregion, die zu entsperren ist, anzugeben,
wobei optional der Prozessor (216) für Folgendes konfiguriert ist:
Berechnen der Anzahl von kompatiblen Datenelementen, die zur Auswahl verfügbar werden, falls jede der gesperrten dynamischen Anzeigeregionen unabhängig entsperrt wird, und
Bestimmen der gesperrten dynamischen Anzeigeregion, die zu entsperren ist, als die dynamische Anzeigeregion, die die größte Anzahl von kompatiblen Datenelementen zur Auswahl liefert, falls sie entsperrt werden würde.

10. Vorrichtung gemäß einem der vorhergehenden Ansprüche,
wobei die Kompatibilitätsinformationen ferner eine Angabe der Anzeigepräferenz für jedes Datenelement innerhalb jedes Satzes umfasst, und
wobei, nachdem das Datenelement zur Anzeige in der gegebenen dynamischen Anzeigeregion ausgewählt worden ist, die Anzeige eingerichtet ist, um ein kompatibles Datenelement in jeder der anderen dynamischen Anzeigeregionen gemäß der Anzeigepräferenz für jedes Datenelement anzuzeigen;
wobei optional die Anzeigepräferenzen eingerichtet sind, um basierend auf Informationen über Benutzerauswahlen aktualisiert zu werden.

11. Vorrichtung gemäß einem der vorhergehenden Ansprüche, wobei, nachdem das Anzeigeelement zur Anzeige in der gegebenen dynamischen Anzeigeregion ausgewählt worden ist, in anderen dynamischen Anzeigeregionen zur Auswahl angezeigte Datenelemente auf eine erste Weise angezeigt werden, falls sie mit dem Datenelement kompatibel sind, und auf eine zweite Weise angezeigt werden, falls sie nicht mit dem Datenelement kompatibel sind.

12. Vorrichtung gemäß einem der vorhergehenden Ansprüche, wobei die Eingabeeinheit (214) die Anzeige (204) beinhaltet und wobei die Anzeige ein Berührungsbildschirm ist.

13. Vorrichtung gemäß einem der vorhergehenden Ansprüche, wobei die Anzeige (204) eingerichtet ist, um die Datenelemente in der dynamischen Anzeigeregion als Scrollräder anzuzeigen, und die Eingabeeinheit (214) eingerichtet ist, um eine Benutzerauswahl eines Datenelements zur Anzeige in einer dynamischen Anzeigeregion durch Scrollen des Scrollrads der dynamischen Anzeigeregion zu empfangen.

14. Vorrichtung gemäß einem der vorhergehenden Ansprüche, ferner beinhaltend:
eine Standortbestimmungseinheit, die dazu konfiguriert ist, den Benutzerstandort zu bestimmen; und
eine Kommunikationseinheit (210) zum Kommunizieren mit einem Netzwerkserver, der mit einer Vielzahl von Standorten assoziierte Daten speichert,
wobei die Vorrichtung mit Datenelementen, die mit einem ersten Standort assoziiert sind, befüllt wird und wobei, wenn die Standortbestimmungseinheit bestimmt, dass der Benutzer einen zweiten Standort betreten hat, die Kommunikationseinheit (210) dazu konfiguriert ist, mit dem Netzwerkserver zu kommunizieren und mit dem zweiten Standort assoziierte Datenelemente von dem Server zu empfangen;
wobei optional die Kommunikationseinheit (210) dazu konfiguriert ist, Informationen über die Benutzerauswahl an den Netzwerkserver zu übertragen.

15. Ein Verfahren, in einer eine Anzeige (204) und eine Eingabeeinheit (214) beinhaltenden Vorrichtung, zum Assistieren eines Benutzers beim Auswählen einer Vielzahl von kompatiblen Datenelementen, beinhaltend:
Anzeigen, durch die Anzeige (204), einer Vielzahl von dynamischen Anzeigeregionen (302a-f) und einer Vielzahl von Sperrregionen (308a-f), wobei jede dynamische Anzeigeregion mit einem jeweiligen Satz Datenelemente zur Anzeige assoziiert ist,
wobei die Datenelemente mit Kompatibilitätsinformationen assoziiert sind, wobei die Datenelemente in jedem Datensatz nur in erlaubten Kombinationen ausgewählt werden können und die Kompatibilitätsinformationen angeben, welche Elemente in jedem Datensatz mit welchen Elementen in den anderen Datensätzen kompatibel sind, und
wobei jede Sperrregion (308a-f) mit einer jeweiligen der Vielzahl von dynamischen Anzeigeregionen (302a-f) assoziiert ist; und
Empfangen, durch die Eingabeeinheit, (214), einer Benutzerauswahl eines Datenelements zur Anzeige in einer dynamischen Anzeigeregion, wobei die dynamischen Anzeigeregionen unter Verwendung der Eingabeeinheit unabhängig auswählbar sind;
wobei, wenn ein Datenelement zur Anzeige in einer gegebenen dynamischen Anzeigeregion (302a) ausgewählt wird, das Verfahren das Aktualisieren der Anzeige beinhaltet, um ein jeweiliges Datenelement anzuzeigen, das mit dem Datenelement in jeder der anderen dynamischen Anzeigeregionen (302b-f) kompatibel ist; und
wobei, nach einer Auswahl des Datenelements in der gegebenen dynamischen Anzeigeregion und einer nachfolgenden Auswahl eines inkompatiblen Datenelements in einer weiteren dynamischen Anzeigeregion, die Anzeige aktualisiert wird, um ein kompatibles Datenelement in der gegebenen dynamischen Anzeigeregion anzuzeigen, wobei das inkompatible Datenelement nicht mit dem Datenelement kompatibel ist und das kompatible Datenelement mit dem inkompatiblen Datenelement kompatibel ist,
das Verfahren ferner beinhaltend:
Detektieren, durch die Eingabeeinheit (214), einer Auswahl, durch den Benutzer, einer mit der gegebenen dynamischen Anzeigeregion (302a) assoziierten Sperrregion (308a), um die gegebene dynamische Anzeigeregion (302a) zu sperren; und
Sperren der gegebenen dynamischen Anzeigeregion (302a), wobei, nachdem das Datenelement zur Anzeige in der dynamischen Anzeigeregion (302a) ausgewählt wurde und nachdem die Auswahl, durch den Benutzer, der mit der gegebenen dynamischen Anzeigeregion (302a) assoziierten Sperrregion (308a) empfangen wurde, nur jene Datenelemente in anderen Sätzen, die mit dem Datenelement kompatibel sind, zur Auswahl in den anderen dynamischen Anzeigeregionen (302b-f) verfügbar sind.

16. Ein computerlesbares Medium, das computerlesbaren Code zum Steuern einer Vorrichtung enthält, um das Verfahren gemäß Anspruch 15 auszuführen.

## Revendications

1. Un appareil destiné à aider un utilisateur à sélectionner une pluralité d'éléments de données compatibles comprenant :
un affichage (204) conçu pour afficher une pluralité de zones d'affichage dynamique (302a à f), chaque zone d'affichage dynamique étant associée à un ensemble respectif d'éléments de données à afficher, les éléments de données étant associés à des informations de compatibilité, les éléments de données dans chaque ensemble de données ne pouvant être sélectionnés que dans des combinaisons autorisées et les informations de compatibilité indiquant quels éléments dans chaque ensemble de données sont compatibles avec quels éléments dans les autres ensembles de données ; et
une unité d'entrée (214) conçue pour recevoir une sélection d'utilisateur d'un élément de données à afficher dans une zone d'affichage dynamique, les zones d'affichage dynamique (302a à f) étant sélectionnables indépendamment à l'aide de l'unité d'entrée ;
où, lorsqu'un élément de données est sélectionné pour être affiché dans une zone d'affichage dynamique donnée (302a), l'affichage (204) est mis à jour pour afficher un élément de données respectif qui est compatible avec l'élément de données sélectionné dans chacune des autres zones d'affichage dynamique (302b à f) ; et
où, à la suite de la sélection de l'élément de données dans la zone d'affichage dynamique donnée, et de la sélection subséquente d'un élément de données incompatible dans une zone d'affichage dynamique supplémentaire, l'affichage est mis à jour pour afficher un élément de données compatible dans la zone d'affichage dynamique donnée,
l'élément de données incompatible n'étant pas compatible avec l'élément de données et l'élément de données compatible étant compatible avec l'élément de données incompatible,
l'affichage (204) étant conçu en outre pour afficher une pluralité de zones de verrouillage (308a à f), chaque zone de verrouillage (308a à f) étant associée à une zone respective de la pluralité de zones d'affichage dynamique (302a à f), et l'unité d'entrée (214) étant en outre conçue pour détecter une sélection par l'utilisateur d'une zone de verrouillage (308a) associée à la zone d'affichage dynamique donnée (302a) afin de verrouiller la zone d'affichage dynamique donnée ; et
où, une fois que l'élément de données est sélectionné pour être affiché dans la zone d'affichage dynamique donnée (302a) et une fois que la sélection par l'utilisateur de la zone de verrouillage (308a) associée à la zone d'affichage dynamique donnée (302a) est reçue, seulement ceux des éléments de données dans d'autres ensembles qui sont compatibles avec ledit élément de données sont disponibles pour une sélection dans les autres zones d'affichage dynamique (302b à f).

2. L'appareil de la revendication 1, comprenant en outre :
une mémoire de données (206) conçue pour stocker les informations de compatibilité ;
un processeur (216) conçu pour déterminer, lorsqu'un élément de données dans une zone d'affichage dynamique est sélectionné pour être affiché, quels éléments de données dans les autres ensembles sont compatibles avec l'élément de données à l'aide des informations de compatibilité.

3. L'appareil de la revendication 2, comprenant en outre :
une unité de communication (210) conçue pour communiquer avec un appareil externe,
l'unité de communication (210) étant conçue pour recevoir des informations relatives aux ensembles d'éléments de données associés aux zones d'affichage dynamique (302a à f) et des informations de compatibilité provenant de l'appareil externe.

4. L'appareil de la revendication 1, comprenant en outre :
une unité de communication (210) conçue pour communiquer avec un appareil externe conçu pour stocker des informations de compatibilité relatives à la façon dont chaque élément de données dans chaque ensemble est compatible avec les éléments de données dans les autres ensembles ;
l'unité de communication (210) étant conçue pour envoyer à l'appareil externe des informations relatives à la sélection d'utilisateur de l'élément de données ;
l'unité de communication (210) étant conçue pour recevoir, en provenance de l'appareil externe, des informations relatives à quels éléments de données dans les autres ensembles sont compatibles avec l'élément de données.

5. Un appareil selon l'une quelconque des revendications 1 à 4, où une fois que l'élément de données a été sélectionné pour être affiché dans la zone d'affichage dynamique donnée et une fois qu'un deuxième élément de données, qui est compatible avec l'élément de données, a été sélectionné pour être affiché dans une deuxième zone d'affichage dynamique, seulement ceux des éléments de données provenant d'autres ensembles de données qui sont compatibles avec l'élément de données et le deuxième élément de données sont affichés dans les autres zones d'affichage dynamique respectives.

6. Un appareil selon la revendication 5, où une fois que le deuxième élément de données a été sélectionné pour être affiché dans la deuxième zone d'affichage dynamique et une fois qu'un troisième élément de données, qui est compatible avec le deuxième élément de données, a été sélectionné pour être affiché dans une troisième zone d'affichage dynamique, seulement ceux des éléments de données provenant d'autres ensembles de données qui sont compatibles avec le deuxième élément de données et le troisième élément de données sont affichés dans les autres zones d'affichage dynamique respectives ;
facultativement où, lorsque le troisième élément de données n'est pas compatible avec l'élément de données, l'élément de données affiché dans la zone d'affichage dynamique donnée est remplacé par un quatrième élément de données qui est compatible avec les deuxième et troisième éléments de données.

7. Un appareil selon l'une quelconque des revendications 5 à 6, où une fois que le deuxième élément de données a été sélectionné pour être affiché dans la deuxième zone d'affichage dynamique et une fois qu'un ordre de verrouiller la deuxième zone d'affichage dynamique a été reçu, seulement ceux des éléments de données dans d'autres ensembles qui sont compatibles avec l'élément de données et le deuxième élément de données sont disponibles pour une sélection dans les autres zones d'affichage dynamique.

8. Un appareil selon la revendication 7, où si l'unité d'entrée reçoit un ordre de changer un élément de données actuellement affiché dans une zone d'affichage dynamique déverrouillée qui n'a pas d'autres éléments de données compatibles pour une sélection en combinaison avec les éléments de données sélectionnés dans la ou chaque zone d'affichage dynamique verrouillée, l'affichage (204) est configuré pour indiquer une zone d'affichage dynamique à déverrouiller.

9. Un appareil selon la revendication 8, où le processeur (216) est configuré pour déterminer une zone d'affichage dynamique verrouillée à déverrouiller, et l'affichage (204) est configuré pour indiquer la zone d'affichage dynamique déterminée à déverrouiller,
facultativement où le processeur (216) est configuré pour :
calculer le nombre d'éléments de données compatibles qui deviendront disponibles pour une sélection si chacune des zones d'affichage dynamique verrouillées est déverrouillée indépendamment, et
déterminer que la zone d'affichage dynamique verrouillée à déverrouiller est la zone d'affichage dynamique qui produirait le plus grand nombre d'éléments de données compatibles pour une sélection si elle était déverrouillée.

10. L'appareil selon l'une quelconque des revendications précédentes,
où les informations de compatibilité incluent en outre une indication de la préférence d'affichage de chaque élément de données à l'intérieur de chaque ensemble, et
où, une fois que l'élément de données a été sélectionné pour être affiché dans la zone d'affichage dynamique donnée, l'affichage est conçu pour afficher un élément de données compatible dans chacune des autres zones d'affichage dynamique conformément à la préférence d'affichage de chaque élément de données ; facultativement où les préférences d'affichage sont conçues pour être mises à jour sur la base d'informations de sélections d'utilisateur.

11. L'appareil selon l'une quelconque des revendications précédentes, où une fois que l'élément de données a été sélectionné pour être affiché dans la zone d'affichage dynamique donnée, des éléments de données affichés pour une sélection dans d'autres zones d'affichage dynamique sont affichés d'une première manière s'ils sont compatibles avec l'élément de données et d'une deuxième manière s'ils ne sont pas compatibles avec l'élément de données.

12. L'appareil selon l'une quelconque des revendications précédentes, où l'unité d'entrée (214) comprend l'affichage (204), et où l'affichage est un écran tactile.

13. L'appareil selon l'une quelconque des revendications précédentes, où l'affichage (204) est conçu pour afficher les éléments de données dans la zone d'affichage dynamique sous forme de molettes de défilement, et l'unité d'entrée (214) est conçue pour recevoir une sélection d'utilisateur d'un élément de données à afficher dans une zone d'affichage dynamique en faisant défiler la molette de défilement de la zone d'affichage dynamique.

14. L'appareil selon l'une quelconque des revendications précédentes, comprenant en outre :
une unité de détermination d'emplacement configurée pour déterminer l'emplacement de l'utilisateur ; et
une unité de communication (210) destinée à communiquer avec un serveur de réseau stockant des éléments de données associés à une pluralité d'emplacements,
où l'appareil est chargé avec des éléments de données associés à un premier emplacement, et où lorsque l'unité de détermination d'emplacement détermine que l'utilisateur est entré dans un deuxième emplacement, l'unité de communication (210) est configurée pour communiquer avec le serveur de réseau et recevoir des éléments de données associés au deuxième emplacement en provenance du serveur ;
facultativement où l'unité de communication (210) est configurée pour émettre des informations concernant les sélections d'utilisateur à destination du serveur de réseau.

15. Un procédé, dans un appareil comprenant un affichage (204) et une unité d'entrée (214), destiné à aider un utilisateur à sélectionner une pluralité d'éléments de données compatibles, comprenant :
le fait d'afficher, par l'affichage (204), une pluralité de zones d'affichage dynamique (302a à f) et une pluralité de zones de verrouillage (308a à f),
chaque zone d'affichage dynamique étant associée à un ensemble respectif d'éléments de données à afficher, les éléments de données étant associés à des informations de compatibilité,
les éléments de données dans chaque ensemble de données ne pouvant être sélectionnés que dans des combinaisons autorisées et les informations de compatibilité indiquant quels éléments dans chaque ensemble de données sont compatibles avec quels éléments dans les autres ensembles de données, et chaque zone de verrouillage (308a à f) étant associée à une zone respective de la pluralité de zones d'affichage dynamique (302a à f) ; et
le fait de recevoir, par l'unité d'entrée (214), une sélection d'utilisateur d'un élément de données à afficher dans une zone d'affichage dynamique, les zones d'affichage dynamique étant sélectionnables indépendamment à l'aide de l'unité d'entrée ;
où, lorsqu'un élément de données est sélectionné pour être affiché dans une zone d'affichage dynamique donnée (302a), le procédé comprend le fait de mettre à jour l'affichage pour afficher un élément de données respectif qui est compatible avec l'élément de données dans chacune des autres zones d'affichage dynamique (302b à f) ; et
où, à la suite de la sélection de l'élément de données dans la zone d'affichage dynamique donnée, et de la sélection subséquente d'un élément de données incompatible dans une zone d'affichage dynamique supplémentaire, l'affichage est mis à jour pour afficher un élément de données compatible dans la zone d'affichage dynamique donnée,
l'élément de données incompatible n'étant pas compatible avec l'élément de données et l'élément de données compatible étant compatible avec l'élément de données incompatible,
le procédé comprenant en outre :
le fait de détecter, par l'unité d'entrée (214), une sélection par l'utilisateur d'une zone de verrouillage (308a) associée à la zone d'affichage dynamique donnée (302a) afin de verrouiller la zone d'affichage dynamique donnée (302a) ; et
le fait de verrouiller la zone d'affichage dynamique donnée (302a), où une fois que l'élément de données est sélectionné pour être affiché dans la zone d'affichage dynamique donnée (302a) et une fois que la sélection par l'utilisateur de la zone de verrouillage (308a) associée à la zone d'affichage dynamique donnée (302a) est reçue, seulement ceux des éléments de données dans d'autres ensembles qui sont compatibles avec ledit élément de données sont disponibles pour une sélection dans les autres zones d'affichage dynamique (302b à f).

16. Un support lisible par ordinateur portant du code lisible par ordinateur destiné à commander un appareil pour mettre en oeuvre le procédé de la revendication 15.
